# EUROPEAN PATENT SPECIFICATION

(11) **EP 2 685 831 B1**
(45) Date of publication and mention of the grant of the patent: **02.08.2017**
(21) Application number: 12710473.5
(22) Date of filing: 14.03.2012
(51) Int. Cl.: A01N 59/00, A01N 25/34, A01P 1/00

(54) **TABLETS FOR THE TREATMENT AND DISINFECTION OF WATER CONTAINING A HALOGENATED DERIVATIVE AND A LUBRICANT**
TABLETTEN ZUM BEHANDELN UND DESINFIZIEREN VON WASSER ENTHALTEND EINEN HALOGENIERTES DERIVAT UND EIN SCHMIERMITTEL
COMPRIMES POUR LE TRAITEMENT ET LA DESINFECTION DE L'EAU CONTENANT UN DERIVE HALOGENE ET UN LUBRIFIANT

(30) Priority: 15.03.2011 ES 201130349 P
(43) Date of publication of application: 22.01.2014
(73) Proprietor: Ercros, S.A., 08014 Barcelona (ES)
(72) Inventor: ESPAÑA MARAVER, Francisco José, E-08036 Barcelona (ES); GRACIA GORRIA, Francisco Andrés, E-22700 Jaca (Huesca) (ES); SIMÓN GAUDÓ, Elena, E-22600 Sabiñanigo (Huesca) (ES); USÓN BORRAZ, Cristina, E-22600 Sabiñánigo (Huesca) (ES)
(74) Representative: ZBM Patents - Zea, Barlocci & Markvardsen
(86) International application number: PCT/EP2012/054443
(87) International publication number: WO 2012/123484

(56) References cited:
- GB-A- 1 335 153

## Description

The present invention relates to tablets useful for the treatment and disinfection of water comprising a chlorine-releasing agent and a mineral alumina silicate as a lubricant. It also relates to the process of obtaining the tablets, as well as to the use thereof for the treatment and disinfection of water.

### STATE OF THE ART

Chloroisocyanuric acids and their salts have long been used in various industrial sectors. It is highlighted its use in the treatment of water, for example in swimming pools and in spas; in the formulation of detergents; and in the formulation of bleaching agents and cleaning products. They have also been used in the sanitization of food processing equipments; in the treatment of the water in open cooling towers, in the bleaching of pulp, etc.

These compounds are usually formulated in the form of powder or granules, but the dosing is easier when in the form of tablets.

The process of forming tablets is affected by the fact that the chloroisocyanuric acids require the presence of a lubricant to prevent the adhesion of the chloroisocyanuric acids to the mold where the compression takes place. Without the presence of a lubricant, the tablet formed is not released from the mold. The incorporation of lubricants in the tablets also allows a uniform release to be produced throughout the tablet and not only in the surface. However, this has meant having to incorporate great amounts of lubricant in the tablets.

Various documents in the state of the art describe tablets including halogenated derivatives and lubricants. Thus, the patent application US3325411 describes bleaching compositions containing chloroisocyanuric acids and boric acid. The use of boric acid in this type of tablets shows the disadvantage that the European Chemicals Agency has included it in the list of chemicals that are of great concern for its toxicity due to their classification as toxic for reproduction. This implies a limitation of the use of boric acid as an adjuvant in the tableting process.

There are other lubricants described in the state of the art that have been used in halocyanuric acid tablets.

The patent application US3336228 describes bleaching or disinfectant agents containing dichlorocyanuric acid or salts thereof as a source of chlorine. In the examples of this patent application, cleaning compositions comprising sodium dichlorocyanurate and diatomaceous earth or feldspar are described. In this document, in the Table 3 it is shown that the compositions made with potassium feldspar and diatomaceous earth exhibit imperfections when compacted.

The patent application GB1335153 describes a method for producing small size tablets comprising a halocyanuric acid and a lubricant. Among the possible lubricants powder soaps acids such as sodium, potassium, zinc, calcium or magnesium stearates; non-aqueous liquids such as glycerin or mineral oil and similar low molecular weight organic liquids, including some relatively volatile such as pentane and dimethylbutane; as well as lubricant powders as mica are cited.

The patent application US3342674 describes sterilizing and disinfectant compositions containing trichlorocyanuric acid, cyanuric acid, sodium stearate and calcium stearate. This type of compositions exhibits a low solubility in water, which implies the presence of residues.

Finally, the patent application WO9011400 describes a water bleaching and disinfectant composition comprising a dichloroisocyanuric acid sodium salt dihydrate, lauryl sulfate and sodium stearate. The disadvantage that this type of lubricants exhibit is that they may leave residues in the water, such as it is illustrated in the table I of this document, wherein tablets containing the dichloroisocyanuric and sodium stearate in a percentage of 0.5% leave residues in the water.

Therefore, from what it is known in the state of the art, it is derived that there is still a need to develop improved tablets for the treatment of water combining the stability of the halogenated derivative, a suitable physical appearance regarding hardness, absence of imperfections, homogeneity and roughness, not leaving residues in the water and also not being toxic.

### DESCRIPTION OF THE INVENTION

The inventors have developed a tablet incorporating the trichloroisocyanuric acid (TCCA), the dichloroisocyanuric acid (DCCA) or their salts as chlorine reactive releasing agents and mica as lubricant.

This specific combination exhibits a set of improved properties that are not fully exhibited by other combinations of commonly used chlorine reactive releasing agents and lubricants. Thus, the lubricant and the tablet active components of the present invention do not chemically interact with each other, so that there is not a deterioration of the same, whereby the halogenated compound is maintained stable. Also the tablets have suitable physical properties regarding hardness and appearance, since they do not show imperfections, the tablets being smooth and homogeneous. Likewise, the dissolution rate of the tablets is not altered by the presence of mica. Furthermore, the tablets of the invention do not leave residues in the aqueous phase to be treated. Finally, the process of obtaining the tablets is also advantageous, being easy to be carried out at industrial scale since these tablets are easily released from the mold where they are formed.

Therefore, a first aspect of the present invention relates to a tablet comprising a mixture of:
a) an isocyanuric acid halogenated derivative selected from trichloroisocyanuric acid, dichloroisocyanuric acid or a salt thereof; and
b) mica; wherein the amount of mica in the tablet is from 1 % to 5% by weight.
The trichloroisocyanuric acid (TCCA) is also known as trichloro 1,3,5 triazinetrione. The dichloroisocyanuric acid (DCCA) is also known as dichloro 1, 3, 5-triazinetrione.

The trichloroisocyanuric acid or dichloroisocyanuric acid salts are alkali metal salts, as for example sodium or potassium salts, or alkaline earth metal salts, as for example magnesium or calcium salts.

In the known state of the art it is neither described nor suggested that tablets containing the isocyanuric acid halogenated derivatives and mica according to the present invention exhibit the set of properties described above.

The term "tablet" as used herein, refers to a solid form. They are obtained by agglomerating, by compression, a starting mixture. Different sizes and forms may be obtained, among others, spherical tablets, rectangular tablets and cylindrical tablets.

The term "mica" as used herein, refers to minerals belonging to a group of alumina, iron, calcium, magnesium silicates and alkaline minerals characterized by its easy delamination in thin flexible sheets, within the subgroup of the phyllosilicates. Biotite and muscovite are examples of mica.

In a particular embodiment, the cyanuric acid halogenated derivative is trichloroisocyanuric acid. In another particular embodiment, the salt of the isocyanuric acid halogenated derivative is sodium dichloroisocyanurate.

In a preferred embodiment, the amount of trichloroisocyanuric acid in the tablet is from 90% to 99% by weight.

In a more preferred embodiment, the amount of mica in the tablet is from 1% to 3% by weight. In a still more preferred embodiment, the amount of mica in the tablet is from 1 % to 2% by weight. In an even still more preferred embodiment, the amount of mica in the tablet is from 1 % to 1.5% by weight.

In a preferred embodiment, the amount of the trichloroisocyanuric acid in the tablet is of 98.5% and the amount of mica in the tablet is of 1.5%.

The tablet of the present invention further comprises additional components selected from the group consisting of flocculants, algicides, sequestering agents of the ions responsible for the water hardness, and combinations thereof.

Examples of flocculants include, among others, alumina sulfate, and/or the aluminium polyhydroxychloride, and mixtures thereof. A preferred example is alumina sulfate.

In a preferred embodiment, the amount of flocculant in the tablet is from 3% to 6% by weight.

Examples of algicides include, among others, the iron sulfate, the endothall, the quinoclamine, the N-alkyl dimethyl benzyl ammonium chlorides or bromides, the calcium hypochlorite and/or the dichlorophen and mixtures thereof.

In a preferred embodiment, the amount of algicide in the tablet is from 2% to 4% by weight.

Examples of sequestering agents of ions responsible for the water hardness include the aminopolycarboxylates, as the ethylenediaminetetraacetic acid (EDTA), the polyphosphates as sodium hexametaphosphate, the phosphonates as the aminotrimethylenephosphonic acid, the diphosphonic hydroxyethane and/or the hydroxycarboxylates as citric acid, tartaric acid, and gluconic acid and mixtures thereof.

In a preferred embodiment, the amount of sequestering agent in the tablet is from 0.1 % to 1% by weight.

Another aspect of the invention relates to the preparation of the tablets of the present invention. The process comprises: a) mixing an isocyanuric acid halogenated derivative with mica, b) feeding the molds with the mixture of step a), c) compressing the molds of step b), and d) ejecting the tablet from the mold.

The tablets of the present invention have the ability to release chlorine in an aqueous medium, whereby they are useful for the disinfection and treatment of water. Thus, a last aspect of the invention is the use of the tablets of the present invention for the treatment and disinfection of water.

The following examples are provided by way of illustration.

### EXAMPLES

### Example no. 1: chemical compatibility of the mica with the TCCA and comparison with that of other lubricants

A total of 100 grams of the TCCA mixture and different lubricants (boric acid, mica, a commercial wax (Licowax KST, CAS number 68476-04-1), cellulose Heweten 102, talc, sodium acetate, potassium feldspar, diatomaceous earths and a mixture of magnesium stearate and lauryl sulfate (1/1)), with varying percentages between 1 and 5% of the lubricant, were weighted. The different mixtures were placed in a 500 ml ground Erlenmeyer flask. It was capped with the suitable device and the same was fixed with a clamp to the Erlenmeyer flask.

It was placed in the oven at 60 ± 2° C and maintained for 15 hours, after which it was removed and allowed to cool down for an hour.

Aided by a vacuum pump the gas contained in the Erlenmeyer flask was bubbled through three wash bottles, one empty for safety, another containing approximately 70 ml of 10% potassium iodide and 30 ml of 10% sulfuric acid and the third one empty, also for safety. This operation lasted five minutes, enough time for the end pressure to be lower than 100 mmHg.

The wash bottles were disconnected from the Erlenmeyer flask and the second bottle contents was decanted, together with its washing water, to another 500 ml Erlenmeyer flask.

The released iodine was titrated with 0.1 N sodium thiosulfate until disappearance of the yellow color. The result was expressed in grams of chlorine released, for the cases of boric acid, mica, licowax, cellulose, talc, and sodium acetate.

The following table 1 shows the results obtained with boric acid, mica, Licowax KST, cellulose Heweten 102, talc and sodium acetate.

**Table 1. Grams of chlorine released as a function of the lubricant used and the percentage of lubricant added.**

| | Grams of chlorine released | | |
|---|---|---|---|
| Percentage of lubricant | 1% | 3% | 5% |
| Boric acid | 5.3 | 6.4 | --- |
| Mica | 5.2 | 12.9 | 8.0 |
| Licowax KST | 291 | --- | --- |
| Cellulose Heweten 102 | 9.5 | 20.3 | 29.8 |
| Talc | 1.1 | 2.1 | 5.0 |
| Sodium acetate | 13.1 | 26.6 | --- |

This comparative example illustrates how mica shows a chemical interaction with the components of the tablet comparable to that of the boric acid, this being lower than that shown by other selected lubricants. These results indicate that a tablet made does not undergo chemical deterioration over time.

The commercial wax (Licowax KST) and the sodium acetate produce a strong degassing of chlorine in contact with TCCA. The cellulose is at the degassing limit value.

The Table 2 shows the results obtained with potassium feldspar, diatomaceous earths and a mixture of magnesium stearate and sodium lauryl sulfate (1/1).

**Table 2. Grams of chlorine released as a function of the lubricant used and the percentage of lubricant added.**

| | Grams of chlorine released | | |
|---|---|---|---|
| Percentage of lubricant | 1% | 2% | 3% |
| Potassium feldspar | 3.9 | 5.3 | 7 |
| Diatomaceous earth | 5.6 | 8.1 | 10.5 |
| Mixture of magnesium stearate and sodium lauryl sulfate (1/1) | 7 | 9.5 | 14.7 |

Both the potassium feldspar and the diatomaceous earth show a good degassing value mixed with TCCA. The mixture of stearate and sodium lauryl sulfate with TCCA can be used in ratios around 1%, but the degassing is high if used in ratios higher than 2%.

### Example no. 2: physical properties of the tablet of TCCA and mica and comparison with tablets comprising other lubricants.

Mixtures of 1.5 % of the selected lubricants with grain TCCA were made for its subsequent tableting in the BONALS BE-30 machine. The final appearance of the tablet was visually analyzed.

For the mica, there were also made 0.5 to 1 % mixtures.

**Table 3. Physical properties of the tablets as a function of the lubricant used and the percentage by weight of the lubricant added**

| Lubricant | %Weight | Manual breaking of the tablet | Observations |
|---|---|---|---|
| Boric acid | 1.5 | No | Suitable appearance |
| Mica | 0.5 | No | The tablets show more physical imperfections in their surface than the tablets with 1 and 1.5% of mica |
| Mica | 1 | No | Suitable appearance |
| Mica | 1.5 | No | Suitable appearance |
| Cellulose Heweten 102 | 1.5 | No | The tablets show more physical imperfections in their surface than the rest of the tablets |
| Licowax 520 PE | 1.5 | No | Suitable appearance |
| Talc | 1 | No | Suitable appearance |
| Potassium feldspar | 1.5 | No | The machine makes noise while compacting. Imperfect edges. |
| Diatomaceous earth | 1.5 | No | The machine makes noise while compacting. Imperfect edges. |
| Magnesium stearate + sodium lauryl sulfate | 1.5 (0.9% + 0.6%) | Yes | Very good appearance. |
| Magnesium stearate + sodium lauryl sulfate | 1.5 (0.75% + 0.75%) | No | Very good appearance. |
| Magnesium stearate + sodium lauryl sulfate | 1.5 (0.5% + 1%) | No | Very good appearance. |

This example illustrates how the mica, in percentages of 1 % and 1.5% with TCCA, produces the desired lubrication in the tableting, comparable to that obtained with boric acid.

The results obtained in these tests show that the lozenges made with potassium feldspar and diatomaceous earth exhibit surface imperfections presumably due to a bad lubrication of the TCCA by the added products. The edges of the lozenges are not perfect and furthermore, the machine makes noise while compacting.

With respect to the different mixtures of magnesium stearate and sodium lauryl sulfate, the lozenges are perfect regarding appearance. Initially, they manually break, but the pressure of the machine is changed and the assay is repeated, obtaining lozenges with suitable hardness, perfect edges, and the machine does not make any noise while compacting.

The tablet formed with cellulose is not suitable for its imperfections in its edges, whereby this material was also discarded as a lubricant.

### Example no. 3: dissolution rate of the tablets and performance in dissolution

The tablets formed in the example no. 2 were placed in a beaker with 500-600 ml of tap water at room temperature and were left to stand and immersed edgewise for 10 ± 1 minutes, after which they were removed, gently dried with the aid of filter paper or other absorbent paper, and weighed again.

Next, the dissolution rate of the tablets was measured in a weir installed in a swimming pool of 2.7 m³. The conditions in the assay were the following: flow rate through the weir of 8 m³/h, approximate total flow rate 10-11 m³/h, temperature of the water 20 ± 1° C, residence time 5 hours approximately.

Once the time was over, the tablets were removed, gently dried with the aid of filter paper or other absorbent paper, and weighed again.

**Table 4. Shows the dissolution rate of the different lubricants and the presence or not of residues in the water being treated.**

| Lubricant | Weight (%) | Dissolution rate (g/h) | Observations |
|---|---|---|---|
| Boric acid | 1.5 | 7.6 | Does not leave any residue |
| Mica | 0.5 | 6 | Does not leave any residue |
| Mica | 1 | 6 | Does not leave any residue |
| Mica | 1.5 | 5.9 | Does not leave any residue |
| Cellulose Heweten 102 | 1.5 | 8.6 | Does not leave any residue |
| Licowax 520 PE | 1.5 | 4.7 | Leaves a solid residue stuck to the walls of the swimming pool |
| Talc | 1 | 5.2 | Leaves a solid residue in the surface of the swimming pool |
| Potassium feldspar | 1.5 | 5.2 | Does not leave any residue |
| Diatomaceous earth | 1.5 | 4.7 | Does not leave any residue |
| Mixture of stearate and lauryl sulfate | 1 | 5.9 | Leaves a solid residue in the surface of the swimming pool |

The dissolution rates of the tablets with mica are appropriate, similar to that obtained with boric acid.

Licowax 520 PE, the mixture of stearate and lauryl sulfate and the talc leave residues adhered to the walls of the swimming pool.

### Example no. 4: performance of the tablets in actual swimming pools

To ensure what already observed in the pilot swimming pool, several assays of use of tablets manufactured with mica as lubricant in a ratio of 1 % by weight were carried out in four private swimming pools. Specifically, tablets with alumina sulfate as flocculant were prepared for this example.

Periodical water samples of the four swimming pools were taken, with the main objective of observing its clarity and the silicon and aluminium concentrations in the same, and thus having an idea of the possible presence of mica in suspension. In the following tables the results of the cyanuric acid, silicon, aluminium, solids in suspension, copper, and boron analysis obtained during the months of July, August and September of 2010 are shown. In the analysis performed on each of the four studied swimming pools, it was appreciated that the presence of aluminium was around 10 ppb in one of the swimming pools, between 10 and 70 ppb in another, and was negligible in the other two, while silicon was present in the same concentration than in the water with which the swimming pool was refilled, i.e., the tablets did not provide any more silicon. Altogether suggests that the mica, once released from the tablet, remains in the filter of the swimming pool and does not leave any residue in the water.

**Table 5. Concentrations of cyanuric acid, silicon, aluminium, solids in suspension, copper and boron in the periodical samples collected in the swimming pool no. 1**

| Swimming pool no. 1 | | | | | | |
|---|---|---|---|---|---|---|
| Date | CA (mg/l) | Si (mg/l) | Al (mg/l) | S.S (mg/l) | Cu (mg/l) | B (mg/l) |
| Jul 12 | 28.7 | 0.24 | 0.0098 | 1 | n.d | n.d |
| Jul 12 | 21 | 0.24 | 0.0146 | 14.4 | n.d | n.d |
| Jul 16 | 33.9 | 0.24 | 0.0051 | 9.3 | n.d | n.d |
| Jul 21 | 46.6 | 0.25 | 0.0071 | 4.1 | n.d | n.d |
| Jul 28 | 58 | 0.24 | 0.0141 | 8.3 | n.d | n.d |
| Aug 03 | 52.6 | 0.26 | 0.0075 | 0 | n.d | n.d |
| Aug 10 | 42.8 | 0.24 | 0.0138 | 21 | n.d | n.d |
| Aug 16 | 57.1 | 0.24 | 0.0127 | 17.5 | n.d | n.d |
| Aug 21 | 55.2 | 0.25 | 0.0108 | 10.9 | n.d | n.d |
| Aug 23 | 58.2 | 0.25 | 0.0112 | 6.8 | n.d | n.d |
| Aug 25 | 56.6 | 0.25 | 0.0108 | 10 | 0.205 | 0.151 |
| Tap water | n.d | 0.24 | n.d | 29.1 | 0.007 | n.d |

**Table 6. Concentrations of cyanuric acid, silicon, aluminium, solids in suspension, copper and boron in the periodical samples collected in the swimming pool no. 2**

| Swimming pool no. 2 | | | | | | |
|---|---|---|---|---|---|---|
| Date | CA (mg/l) | Si (mg/l) | Al (mg/l) | S.S (mg/l) | Cu (mg/l) | B (mg/l) |
| Jul 18 | 41.3 | 0.28 | n.d | n.d. | n.d | n.d |
| Jul 24 | 0 | 0.31 | n.d | 6.6 | n.d | n.d |
| Jul 31 | 58.3 | 0.29 | n.d | 5.2 | n.d | n.d |
| Aug 07 | 60.7 | 0.3 | n.d | 8.4 | n.d | n.d |
| Aug 14 | 64 | 0.29 | n.d | 4.2 | n.d | n.d |
| Aug 21 | 52.6 | 0.3 | n.d | 32.3 | n.d | n.d |
| Aug 24 | 66.6 | 0.3 | n.d | 16.6 | 0.277 | 0.831 |

**Table 7. Concentrations of cyanuric acid, silicon, aluminium, solids in suspension, copper and boron in the periodical samples collected in the swimming pool no. 3**

| Swimming pool no. 3 | | | | | | |
|---|---|---|---|---|---|---|
| Date | CA (mg/l) | Si (mg/l) | Al (mg/l) | S.S (mg/l) | Cu (mg/l) | B (mg/l) |
| Jul 19 | 22.9 | 1.93 | n.d. | 2.9 | 0.368 | 0.536 |
| Jul 23 | 78.1 | 1.87 | 0.0023 | 5.3 | 0.414 | 0.569 |
| Jul 27 | 72.2 | 1.87 | 0.0582 | 2.4 | 0.39 | 0.572 |
| Aug 04 | 52.7 | 1.72 | n.d. | 1.8 | 0.349 | 0.48 |
| Aug 06 | 72 | 0.99 | 0.0544 | 4.2 | 0.455 | 0.64 |
| Aug 07 | 80.7 | 0.86 | 0.0325 | 10.7 | 0.394 | 0.521 |
| Aug 14 | 89.4 | 0.88 | 0.0362 | 3.1 | 0.386 | 0.543 |
| Aug 17 | 88.2 | 0.91 | 0.0734 | 1.4 | 0.416 | 0.594 |
| Aug 19 | 97.4 | 0.84 | 0.0294 | n.d. | 0.378 | 0.485 |
| Aug 25 | 105.4 | 0.9 | 0.154 | 1.1 | 0.401 | 0.585 |

**Table 8. Concentrations of cyanuric acid, silicon, aluminium, solids in suspension, copper and boron in the periodical samples collected in the swimming pool no. 4**

| Swimming pool no. 4 | | | | | | |
|---|---|---|---|---|---|---|
| Date | CA (mg/l) | Si (mg/l) | Al (mg/l) | S.S (mg/l) | Cu (mg/l) | B (mg/l) |
| Jul 13 | 126 | 0.32 | n.d. | 2.5 | 0.052 | 0.59 |
| Jul 19 | 131 | 0.16 | n.d. | 0.9 | 0.053 | 0.189 |
| Jul 25 | 132 | 0.36 | n.d. | n.d. | 0.14 | 0.586 |
| Aug 02 | 143 | 0.36 | n.d. | 45.5 | 0.178 | 0.616 |
| Aug 08 | 42 | 0.34 | 0.021 | n.d. | 0.171 | 0.596 |
| Aug 16 | 155 | 0.36 | n.d. | n.d. | 0.243 | 0.592 |
| Aug 22 | 160 | 0.36 | n.d. | 1 | 0.291 | 0.626 |
| Aug 29 | 171 | 0.36 | n.d. | 1.6 | 0.364 | 0.62 |
| Sep 05 | 176 | 0.35 | n.d. | 3.4 | 0.417 | 0.608 |
| Sep 13 | 190 | 0.41 | n.d. | 1.6 | 0.567 | 0.787 |
| Sep 20 | 198 | 0.36 | n.d. | n.d. | 0.625 | 0.64 |

## Claims

1. Tablet comprising a mixture of:
a) an isocyanuric acid halogenated derivative selected from trichloroisocyanuric acid, dichloroisocyanuric acid or a salt thereof; and
b) mica;
wherein the amount of mica in the tablet is from 1 % to 5% by weight.

2. Tablet according to claim 1, wherein the cyanuric acid halogenated derivative is trichloroisocyanuric acid.

3. Tablet according to claim 1, wherein the isocyanuric acid halogenated derivative salt is sodium dichloroisocyanurate.

4. Tablet according to claim 2, wherein the amount of trichloroisocyanuric acid is from 90% to 99% by weight.

5. Tablet according to claim 4, wherein the amount of mica in the tablet is from 1 to 1.5%.

6. Tablet according to claim 5, wherein the amount of mica in the tablet is of 1.5% and the amount of trichloroisocyanuric acid is of 98.5%.

7. Tablet according to any of claims 1-6, further comprising additional components selected from the group consisting of flocculants, algicides, sequestering agents of the ions responsible for the water hardness, and combinations thereof.

8. Tablet according to claim 7, wherein the flocculant is alumina sulfate.

9. Process for the preparation of a tablet as defined in any of claims 1-8, comprising: a) mixing an isocyanuric acid halogenated derivative with mica, b) feeding the molds with the mixture of step a), c) compressing the molds of step b), and d) ejecting the tablet from the mold.

10. Use of the tablets as defined in any of claims 1-8, for the treatment and disinfection of water.

## Patentansprüche

1. Tablette umfassend eine Mischung aus:
a) einem halogenierten Derivat der Isocyanursäure ausgewählt aus Trichlorisocyanursäure, Dichlorisocyanursäure oder einem Salz davon; und
b) Glimmer;
wobei der Glimmergehalt in der Tablette von 1 Gew.-% bis 5 Gew.-% reicht.

2. Tablette nach Anspruch 1, wobei das halogenierte Derivat der Cyanursäure Trichlorisocyanursäure ist.

3. Tablette nach Anspruch 1, wobei das halogenierte Salzderivat der Isocyanursäure Natriumdichlorisocyanurat ist.

4. Tablette nach Anspruch 2, wobei der Gehalt an Trichlorisocyanursäure von 90 Gew.-% bis 99 Gew.-% reicht.

5. Tablette nach Anspruch 4, wobei der Gehalt an Glimmer in der Tablette von 1 bis 1,5% reicht.

6. Tablette nach Anspruch 5, wobei der Gehalt an Glimmer in der Tablette 1,5% beträgt und der Gehalt an Trichlorisocyanursäure 98,5% beträgt.

7. Tablette nach einem der Ansprüche 1-6, weiterhin umfassend zusätzliche Inhaltsstoffen ausgewählt aus der Gruppe bestehend aus Flockungsmitteln, Algiziden, Chelatoren von den Ionen, welche die Wasserhärte verursachen, und Kombinationen davon.

8. Tablette nach Anspruch 7, wobei das Flockungsmittel Aluminiumsulfat ist.

9. Verfahren zur Herstellung von einer Tablette wie in einem der Ansprüche 1-8 definiert, umfassend: a) das Mischen von einem halogenierten Derivat der Isocyanursäure mit Glimmer, b) das Zuführen der Mischung von Schritt a) in die Formen, c) das Komprimieren der Formen von Schritt b), und d) das Entformen der Tablette.

10. Verwendung der Tabletten wie in einem der Ansprüche 1-8 definiert zur Behandlung und Desinfizierung von Wasser.

## Revendications

1. Comprimé comprenant un mélange de :
a) un dérivé halogéné de l'acide isocyanurique choisi parmi l'acide trichloroisocyanurique, l'acide dichloroisocyanurique ou un sel de ceux-ci ; et
b) du mica ;
dans lequel la quantité de mica dans le comprimé est de 1% à 5% en poids.

2. Comprimé selon la revendication 1, dans lequel le dérivé halogéné de l'acide cyanurique est l'acide trichloroisocyanurique.

3. Comprimé selon la revendication 1, dans lequel le sel dérivé halogéné de l'acide isocyanurique est le dichloroisocyanurate de sodium.

4. Comprimé selon la revendication 2, dans lequel la quantité d'acide trichloroisocyanurique est de 90% à 99% en poids.

5. Comprimé selon la revendication 4, dans lequel la quantité de mica dans le comprimé est de 1 à 1,5%.

6. Comprimé selon la revendication 5, dans lequel la quantité de mica dans le comprimé est de 1,5% et la quantité d'acide trichloroisocyanurique est de 98,5%.

7. Comprimé selon l'une quelconque des revendications 1-6, comprenant en outre des composants additionnels choisis dans le groupe constitué des floculants, des algicides, des agents séquestrants des ions responsables de la dureté de l'eau, et des combinaisons de ceux-ci.

8. Comprimé selon la revendication 7, dans lequel le floculant est le sulfate d'aluminium.

9. Procédé de préparation d'un comprimé tel que défini dans l'une quelconque des revendications 1-8, comprenant : a) mélanger un dérivé halogéné de l'acide isocyanurique avec du mica, b) alimenter le mélange de l'étape a) aux moules, c) comprimer les moules de l'étape b), et d) démouler la tablette.

10. Utilisation des tablettes telles que définies dans l'une quelconque des revendications 1-8 pour le traitement et la désinfection de l'eau.
